# EUROPEAN PATENT SPECIFICATION

(11) **EP 3 572 358 B1**
(45) Date of publication and mention of the grant of the patent: **17.02.2021**
(21) Application number: 19173670.1
(22) Date of filing: 09.05.2019
(51) Int. Cl.: B65G 21/22

(54) **SUPPORT STRUCTURE WITH IMPROVED BOTTOM FOR AN ARTICULATED LINK CONVEYOR**
TRAGSTRUKTUR MIT VERBESSERTEM BODEN FÜR EINEN GELENKIGEN GLIEDERFÖRDERER
STRUCTURE DE SUPPORT À FOND AMÉLIORÉ POUR UN CONVOYEUR À LIAISON ARTICULÉE

(30) Priority: 22.05.2018 IT 201800005596
(43) Date of publication of application: 27.11.2019
(73) Proprietor: Movex S.p.A., 24060 Castelli Calepio (BG) (IT)
(72) Inventor: MARSETTI, Sergio, 6900 PARADISO (CH); MARSETTI, Matteo, 24060 TELGATE (BG) (IT)
(74) Representative: Ottazzo, Marco Francesco Agostino

(56) References cited:
- WO-A1-2009/091251

## Description

The present invention generally relates to an articulated-link conveying device and, specifically to a support and guide structure for an articulated link conveyor.

Even more specifically, the present invention relates to a curvilinear support structure for guiding an articulated link conveyor at least partially made of a ferromagnetic material, wherein such support structure is provided with magnets configured for attracting the links of the conveyor towards their respective sliding surfaces. This support structure may constitute both the upper part, or forward part, and the lower part, or return part, of a closed-loop articulated link conveyor.

As is known, an articulated link conveyor comprises a sequence of generally plate-like links, which extend in a direction substantially transversal to the moving direction of the conveyor. In the forward part of the conveyor, in a typical closed-loop path, these links form a rest surface for the objects moved by the conveyor itself.

Considering the movement direction of the conveyor, each link is connected to the previous link and to the subsequent link by way of hinges usually located in the central part of each link. This way, the links form a continuous closed-loop conveyor, whose forward and return parts usually overlap.

The links are either made of steel, as those described in the ISO 4348 Standard, or of plastic. Should the links be made of plastic, they are conveniently provided with pivot hinges made of a ferromagnetic material in order to interact with the magnets of the support and guide structure.

As a matter of fact, the use of a support structure provided with its respective sliding rail is known to guide each closed-loop articulated link conveyor. Each sliding rail is provided with a pair of sliding surfaces which guide the sliding movement of the opposed transversal ends of the links of the conveyor in the respective forward path. These sliding surfaces are placed either at a constant distance from each other or at different distances.

A hollow space, also referred to as channel, is present between the two sliding surfaces to allow to receive the articulation elements of the links of the conveyor. One or more guides are usually present on the surface opposed to that of the channel to route the links of the conveyor in their return path on their respective support structure.

Should it being necessary to guide a plurality of articulated-link conveyors, the support structure might be provided with a corresponding plurality of sliding rails, that is to say a sliding rail for each articulated link conveyor. The support structure might also be provided with a plurality of return paths for the articulated link conveyors. In this event the number of return paths equals the number of sliding rails of the forward paths and they are usually opposed, that is to say placed below, with respect to such sliding rails.

In the case of links at least partially made of a ferromagnetic material, the support structure is provided with a plurality of magnets. These magnets are usually positioned below the level of the sliding plane, at the centre line axis of each channel. These magnets create a magnetic field which holds the links adherent to the sliding surfaces of the support structure. As a matter of fact, while the conveyor moves, the links would tend to raise from their respective sliding surface, thus jeopardizing the stability of the conveyed objects, if the attraction force exerted by the magnets were not there.

The sliding rails for articulated link conveyors may feature either a rectilinear axis or a curvilinear axis. Examples of curvilinear axis sliding rails for ferromagnetic link conveyors are described, for example, in documents EP 0325333, EP 0790197, EP 0903307, EP 0916599, EP 1091894, and EP 2907774, the latter on behalf of the present patent applicant.

In many embodiments of articulated link conveyors, their respective lower part, or return part, is provided with a number of walls inside which are present respective grooves that form the guides to route the links of the conveyor in their return path. Therefore, since the support structure is usually formed of one or more guide modules having a predetermined length, in order to make it possible to perform operations of extraction from the conveyor, for instance to replace their respective links, such conveyor shall slide along said grooves until it reaches the terminal end of a determined guide module.

Said operation is even more complex in that the various guide modules, in the assembled configuration of a closed-loop articulated link conveyor, are interconnected with each other to form the continuous moving path of the conveyor. Therefore, should be necessary to extract one or more links present along the return path of the conveyor, it would be necessary to perform the disassembling of at least two adjacent guide modules close to which are the links to be replaced.

Another drawback of the known type articulated link conveyors is due to the fact that their respective support and guide structures allow to use one type of conveyor whose link dimensions are predetermined. An example of such support structure, embodied according to the preamble of claim 1 and that makes it possible to use only one type of conveyor having predetermined link dimensions, is described in document WO 2009/091251 A1.

Therefore, an object of the present invention is to provide a support and guide structure for an articulated link conveyor that is capable of solving the above-mentioned drawbacks of the known art in an extremely simple, cost-effective, and particularly functional manner.

In details, an object of the present invention is to provide a support and guide structure for an articulated link conveyor which allow to simplify and speed up the necessary operations for associating and/or separating the conveyor from its respective support and guide structure.

Another object of the present invention is to provide a support and guide structure for an articulated link conveyor that can be easily and quickly modified, so as to use a plurality of conveyors having dimensional features different from each other.

These objects according to the present invention are achieved by providing a support and guide structure for an articulated link conveyor as set forth in claim 1.

Further features of the invention are highlighted by the dependent claims, which are integral part of the present disclosure.

The features and advantages of a support and guide structure for an articulated link conveyor according to the present invention will be more apparent from the explanatory but not limitative description, which makes reference to the attached schematic drawings, wherein:
figure 1 is an isometric perspective top view of a portion or module of support and guide structure for an articulated link conveyor according to the present invention, wherein two channels for their respective forward and return paths of two conveyors are visible;
figure 2 is an isometric perspective bottom view of the structure shown in figure 1;
figure 3 is a side view of the structure shown in figure 1;
figure 4 is a bottom plan view of the structure shown in figure 1;
figure 5 is an isometric perspective top view of the structure shown in figure 1, but with a respective lower component differently mounted as referred to as what is shown in figures 1 to 4;
figure 5A is an enlarged view of a detail shown in figure 5;
figure 6 is an isometric perspective bottom view of the structure shown in figure 5; and
figure 7 is a perspective view of a portion of a generic articulated link conveyor that can be used in the structure shown in figures 1 to 6.

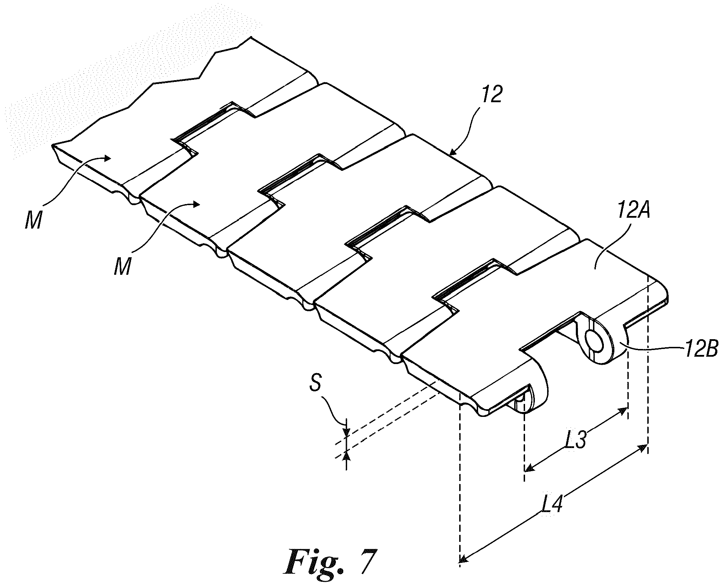

With reference to the figures, a preferred embodiment of the support and guide structure for an articulated link conveyor according to the present invention is shown. The support and guide structure is indicated as a whole by reference numeral 10. The articulated link conveyor M, which is a closed-loop one and which is partially only represented in figure 7, is indicated by reference numeral 12.

It is pointed out that in the figures a structure 10 that supports and guides two conveyors 12 arranged side by side is shown which has a curvilinear development. However, the invention is not limited to this embodiment, which is only provided by way of a non-limiting example. As a matter of fact, the structure 10 according to the invention might be of a type suitable for supporting and guiding one or more conveyors 12 arranged side by side and/or might have a curvilinear, rectilinear or even mixed development. The structure 10 according to the invention can also be suitable for supporting just a reduced section of the overall length of the conveyor 12 and consequently not along the whole length of the conveyor 12.

The links M of the conveyor 12 are of a traditional type and comprise a first substantially flat portion 12A (figure 7), configured for the products being transported to lie on, and a second portion 12B of mutual articulation of the links M, which extends downwards from the first substantially flat portion 12A. The links M of the conveyor 12 can be made of any material suitable for the purpose (for instance made of metal or plastic, with a pin of mutual connection of the links M made of metal). Advantageously, at least a portion of the links M is made of a ferromagnetic material.

The support and guide structure 10 comprises at least one upper guiding element 60, which in the embodiment shown comprises three guides 14, 16, 18 and which is designed to support and guide at least one articulated link conveyor 12 in its forward path. In the embodiment shown in the figures, the upper guiding element 60 is designed to support and guide two identical conveyors 12. The support and guide structure 10 also comprises at least one lower guiding element 20, which is designed to support and guide at least one articulated link conveyor 12 in its return path. In the embodiment shown in the figures, the lower guiding element 20 is designed to support and guide two identical conveyors 12.

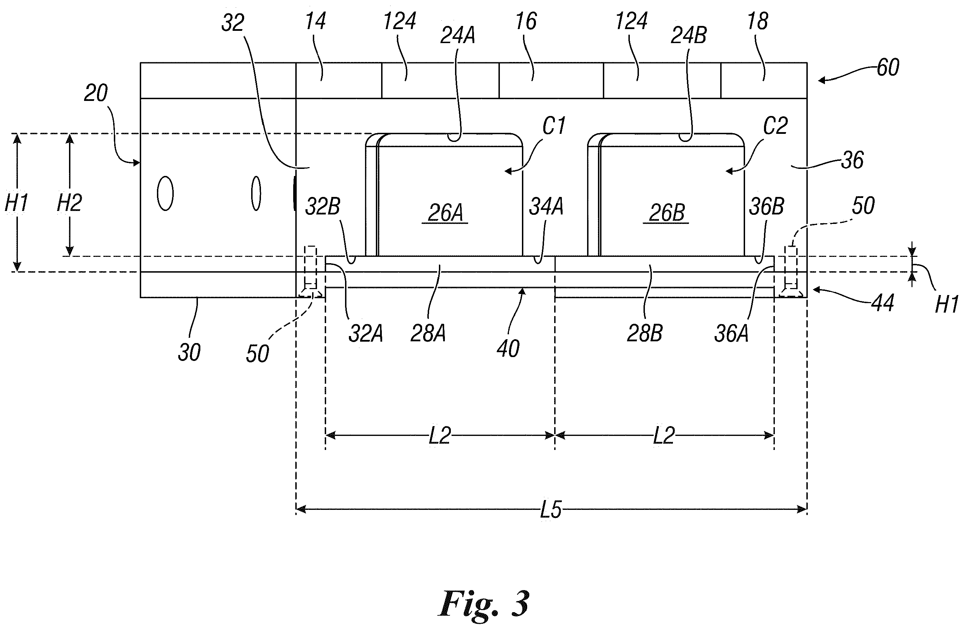

The lower guiding element 20 comprises at least one first channel 26A, 26B (figure 3). In the embodiment shown in the figures there are two first channels 26A, 26B arranged side by side, wherein each first channel 26A, 26B is capable of at least partially housing the second articulation portions 12B (figure 7) of the links M of the conveyor 12.

The lower guiding element 20 also comprises at least one second channel 28A, 28B (figure 3), which extends in communication with and below a respective first channel 26A, 26B. Each second channel 28A, 28B is designed to at least partially support and guide the first substantially flat portions 12A of the links M of the conveyor 12 in the return path of such conveyor 12.

Each first channel 26A, 26B is delimited by a respective upper surface 24A, 24B and by two side walls 32, 34, 36 extending downwards from such upper surface 24A, 24B. In the embodiment shown in the figures, the support and guide structure 10 being configured for supporting and guiding two different conveyors 12 arranged side-by-side, the side walls 32, 34, 36 are three and delimit two first channels 26A, 26B (figure 3), a central wall 34 being shared between these two first channels 26A, 26B.

The second channel 28A, 28B has a cross-sectional dimension L2 (figure 3) which is greater than the corresponding cross-sectional dimension L1 of the corresponding first channel 26A, 26B. More specifically, the cross-sectional dimension L1 of the first channel 26A, 26B is little bigger (for instance, bigger than a value ranging from 1 mm to 20 mm) than the maximum cross-sectional dimension L3 (figure 7) of the second portion 12B of articulation of the links M of the conveyor 10. On the contrary, the cross-sectional dimension L2 of the second channel 28A, 28B is little bigger (for instance, bigger than a value ranging from 1 mm to 10 mm) than the maximum cross-sectional dimension L4 (figure 7) of the first substantially flat portion 12A of the links M of the conveyor 10.

As shown in the figures, since the support structure 10 is of a type suitable for supporting two conveyors 12 arranged side by side, such support structure 10 comprises two first channels 26A, 26B arranged side by side and two respective second channels 28A, 28B, also arranged side by side. In the embodiment shown in the figures, the two second channels 28A, 28B are in communication with one another, so as to actually form a single continuous second channel 28A, 28B. This allows to reduce the overall width L5 (figure 3) of the support and guide structure 10. In order to obtain this continuous channel, the height H2 (figure 3) of the central wall 34 is smaller than the height H1 of the outermost walls 32 and 36 which delimit the two first channels 26A, 26B and the two second channels 28A, 28B.

However, according to an embodiment not shown in the figures, the two second channels 28A, 28B could be even separated from each other by a partition extremal portion of the central wall 34. In such circumstance, the height of the central wall 34 at said partition portion would be equal to that of the other side walls 32 and 36.

Preferably, the second channel 28A, 28B is at least partially formed at an extremal section of each side wall 32, 34, 36. To this end, the side walls 32, 34, 36 are provided, in their extremal portion, with a step 32A, 36A (figure 3) which, in the embodiment shown in the figures, is provided only in the outermost side walls 32 and 36. As already discussed above, the height H2 of the central wall 34 is smaller than the height H1 of the extremal surface of the steps 32A, 36A. This special shape of the ends of the side parts 32, 34, 36 is suitable for delimiting, together with a removable plate 30, which will be described below, at least one portion of the second channel 28A, 28B.

According to the invention, the support and guide structure 10 also comprises at least one plate 30 (one plate 30 only is shown in the embodiment of the figures) that is constrained, in a removable manner, on the lower side to the lower guiding element 20, preferably to at least two side walls 32, 34, 36. The second channels 28A, 28B are delimited by at least one extremal section 32A, 34A, 36A of the side walls 32, 34, 36 and by the plate 30. The plate 30 reversibly closes on the lower side thereof the second channels 28A, 28B and form a sliding and removable support of the conveyor 12, in particular of its first substantially flat portion 12A, in its return path.

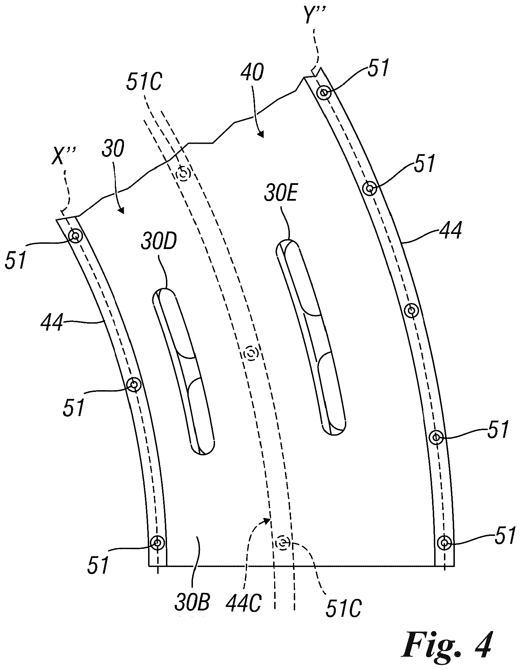

Advantageously, the plate 30 is removably connected to the ends of the side walls 32 by way of usual fastening means 50, for example by way of screws (figure 3), bushings or the like, which insert in holes 51 (figure 4) provided in the edge sections 30C of the plate 30 and that are suitable for penetrating into the side walls 32 and 36 from bottom up. Thanks to the fact that the second channel 28A, 28B is made of a removable component (the plate 30), is extremely simple and easy to access the conveyor 12 to check its conditions, and/or to perform a maintenance service, and/or to replace one or more worn out or damaged links M damaged, and/or to withdraw and/or to replace the conveyor 12 itself.

It is worth pointing out that, according to the invention, the longitudinal length of the plate 30 could be smaller than the overall longitudinal length of the support and guide structure 10. Therefore, the support and guide structure 10 could include sections of its own second channel 28A, 28B that are of a usual type, that is to say without the plate 30 and with the second channel 28A, 28B obtained only in the side walls 32, 34, 36, as well as sections of such second channel 28A, 28B that are made according to the invention, i.e. also delimited by the removable plate 30.

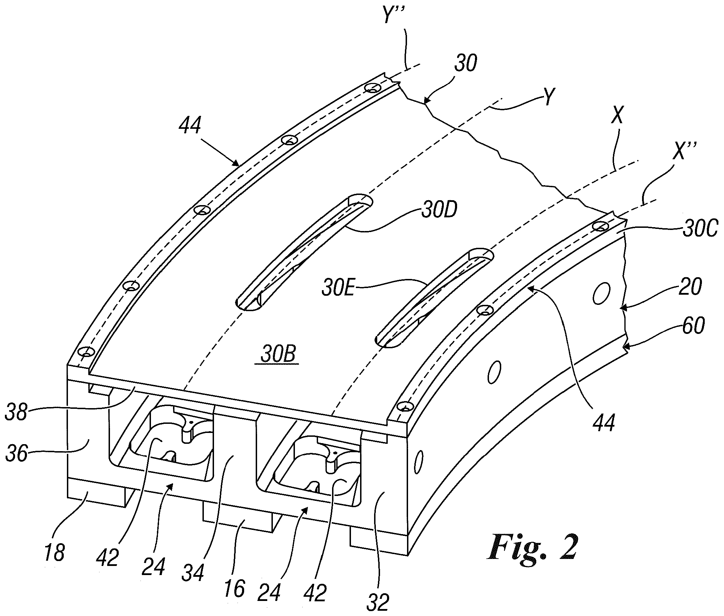

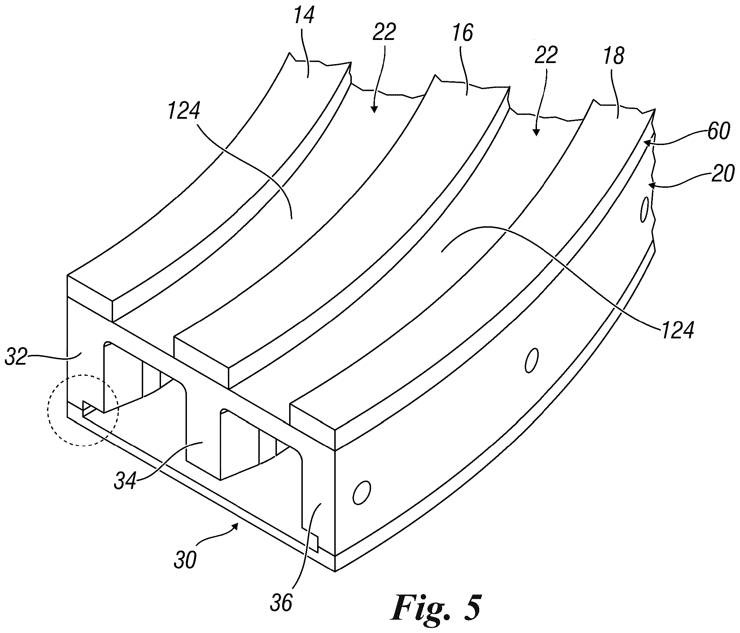

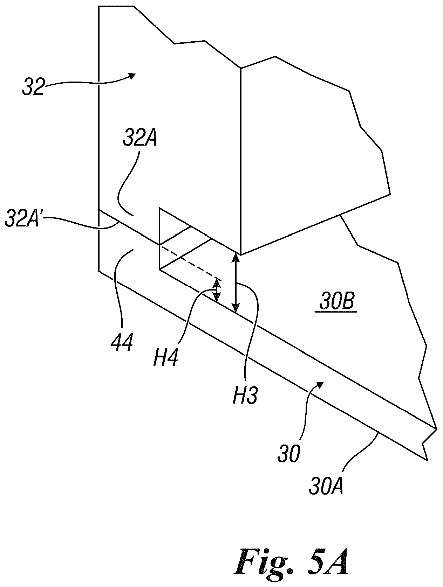

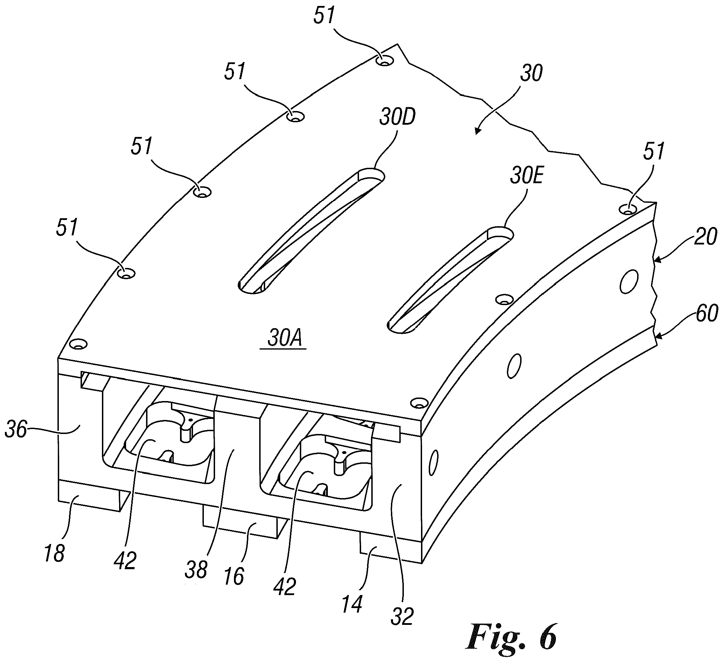

According to the invention, the removable plate 30 is provided with a first flat face 30A (figure 6) and with a second flat face 30B (figure 2) opposite and parallel to the first flat face 30A and provided with at least two spacing steps 44, the shape and dimensions of which are designed so as to increase the distance H4 (figure 5A) between the second flat face 30B and the extremal section of the side walls 32, 34, 36 of the lower guiding element 20. In this way, the height H1 (figure 5A) of the second channel 28A, 28B also increases, in such a way as to house inside it a conveyor 12 with links M having first substantially flat portions 12A featuring a bigger thickness S (figure 7) compared to the situation wherein the plate 30 is secured to the side walls 32, 34, 36 the first flat face 30A being in contact with the extremal section of such side walls 32, 34, 36. , According to the invention, the spacing steps 44 are provided and develop at least at longitudinal extremal edges 30C (figure 2) of the second flat face 30B of the plate 30.

According to an embodiment not shown in the figures, the plate 30 might also include an additional step (shown in phantom lines in figure 4 and identified by the reference 44C), also provided with holes 51C intended for the passage of fixing members and suitable for abutting against the end of the central wall 34 in order to delimit two different second channels 28A, 28B. Such solution is particularly advantageous if the structure 10 is designed to house a greater number of conveyors 12 arranged side by side (for instance, three or more conveyors), wherein it might be appropriate to secure the plate 30 by way of screws 50 not only at its extremal edges, but also in more internal sections.

Advantageously the removable plate 30 includes a plurality of through openings 30D, 30E suitable for connecting the first channels 26A, 26B and the second channels 28A, 28B with the outside and allows, for instance, an inspection of the conveyor 12 and/or the liquid discharge. It is also highlighted that, according to an embodiment not shown in the figures, the ends of the side walls 32 and 36 might also not be provided with the steps 32A and 36A (figure 3) and consequently have the same height of the central wall 34. In such event, the second channels 28A, 28B would be made only by the steps 44 of the plate 30, by constraining such plate 30 to the side walls 32, 34, 36 provided with the steps 44 in contact with the ends (one of which is identified by 32A' in figure 5A) of such side walls 32, 34, 36.

Each first channel 26A, 26B and each second channel 28A, 28B of the lower guiding element 20 is oriented along a respective development axis X, Y. Preferably these development axes X, Y are substantially parallel to the development axes X', Y', Z' of the guides 14, 16, 18 of each upper guiding element 60. Preferably both the development axis X, Y of each first channel 26A, 26B and of each second channel 28A, 28B, and also the corresponding development axes X', Y', Z' of the guides 14, 16, 18 of each upper guiding element 60 are curvilinear axes. Even more preferably, these curvilinear axes are formed of concentric arcs of a circle. Said development axes X, Y, X', Y', Z' might also be rectilinear or mixed axes.

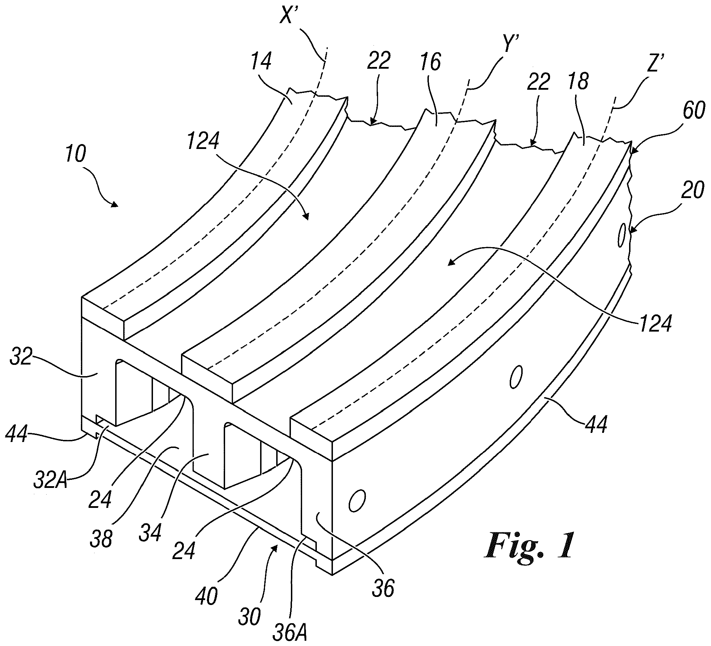

The upper guiding element 60 can be of any traditional type for a person skilled in the art. Anyway, preferably the upper guiding element 60 comprises at least two guides 14, 16, 18 (three guides in the embodiment shown in the figures) that are different and arranged at a predetermined distance D1 (figure 1) to each other. Each of these guides 14, 16, 18 is provided with an upper flat surface designed to support and guide the conveyor 12 in its forward path. Pair of guides 14, 16, 18 adjacent to each other delimit a respective upper channel 124, superiorly opened and suitable for housing at least partially the second articulation portions 12B (figure 7) of the links M of the conveyors 12 in the forward path of the conveyor 12.

Preferably the guides 14, 16, 18 of the upper guiding element 60 are provided with reversible fastening means (for instance pins or screws) which are removable from an upper surface 22 of the lower guiding element 20 which they are connected to. In addition, preferably the guides 14, 16, 18 of the upper guiding element 60 are made of a second material, which is different from a first material which the lower guiding element 20 is made of.

Preferably, the second material which the upper guiding element 60 is made of has a smaller friction coefficient than the friction coefficient which the lower guiding element 20 is made of. Even more preferably, the friction coefficient of the second material is lower by at least 10% than the friction coefficient of the first material.

Preferably, the material which the upper guiding element 60 is made of is a polymeric material, even more preferably composed of polyethylene with a very high molecular weight (UHMW-PE) plus solid lubricants, while also the material the lower guiding element is made of is a polymeric material, even more preferably composed of polyethylene (PE).

According to a different embodiment, the removable lower plate 30 is made of a material which features a lower friction coefficient than the friction coefficient of the remaining parts of the lower guiding element 20 are made of, for instance a friction coefficient lower by at least 10%. In this way, the duration of the parts of the lower guiding element 20 that are more stressed is improved.

Preferably, the lower guiding element 20 also comprises a plurality of cavities 42 (figure 2) each designed for housing one or more magnets. Preferably, the cavities 42 are open at one lower surface 24 (figure 2) thus facing the first channel 26A, 26B of the lower guiding element 20 and are provided with respective closing plates.

The foregoing demonstrates that the support and guide structure for an articulated link conveyor according to the present invention achieves the previously highlighted objects.

The thus conceived support and guide structure for an articulated link conveyor according to the present invention is in any case susceptible of numerous modifications and variants, all of them falling within one and the same inventive concept; also, all details are replaceable by technically equivalent elements. For instance, the support and guide structure could be a sandwich-like structure comprising a plurality of different elements overlapping one another. For instance, a first element might comprise all components needed for supporting and guiding the conveyor in a forward path, whereas a second element, distinct and separate from the first element, might comprise all the components needed for supporting and guiding the conveyor in a return path. In addition, one or more additional elements, suitable for being arranged between the first element and the second element, might be provided. In this way, it might be possible to optimize the features and the materials which the different elements are made of, as a function of they are in contact with the conveyor or not, as well as to choose what portions of each element shall be in contact with the conveyor.

Finally, it worth highlighting that to the lower guiding element can be associated a plurality of plates having different features from each other and suitable for allowing in the return path of conveyors with links having dimensional features, and in particular thicknesses, even very different from each other. To this purpose, it is possible to provide a plurality of plates 30 wherein each plate is provided with two spacing steps 44 featuring a predetermined height, and wherein the height of the steps 44 is different from plate to plate, so as to be able to associate to a plurality of thicknesses S of the links of the conveyors, always an appropriate plate.

In practice, the material used as well as shapes and dimensions might be whatsoever depending on the technical requirements. The scope of protection of the invention is therefore set forth by the attached claims.

## Claims

1. A support and guide structure (10) for at least one closed-loop conveyor (12) with articulated links (M), wherein said links (M) comprise a first substantially flat portion (12A), configured for the product being transported to lie on, and a second portion (12B) of mutual articulation of the links (M), the support and guide structure (10) comprising:
- at least one upper guiding element (60) adapted to support and guide at least one conveyor (12) in a forward path; and
- at least one lower guiding element (20) adapted to support and guide said at least one conveyor (12) in a return path,
wherein said lower guiding element (20) comprises:
- at least one first channel (26A, 26B) configured for at least partially housing the second articulation portions (12B) of the links (M) of said at least one conveyor (12) in its return path; and
- at least one second channel (28A, 28B), developing in communication with and below a respective first channel (26A, 26B) and configured for at least partially supporting and guiding the first substantially flat portions (12A) of the links (M) of said at least one conveyor (12) in its return path,
wherein said first channel (26A, 26B) is delimited by an upper surface (24) and by at least two side walls (32, 34, 36) extending downwards from said upper surface (24), wherein said second channel (28A, 28B) has a cross-sectional dimension (L2) which is greater than the corresponding cross-sectional dimension (L1) of the first channel (26A, 26B), wherein said second channel (28A, 28B) is at least partially delimited by at least one portion of said two side walls (32, 34, 36), wherein the support and guide structure (10) comprises at least one plate (30) removably constrained on the lower side to said lower guiding element (20), in particular to an extremal portion of said at least two side walls (32, 34, 36), wherein said second channel (28A, 28B) is delimited by at least one extremal section (32A, 32B; 34A; 36A, 36B) of said at least two side walls (32, 34, 36) and by said at least one plate (30), and wherein said at least one plate (30) reversibly closes on the lower side said second channel (28A, 28B) so as to form a sliding and removable support of said at least one conveyor (12) in its return path, wherein the removable plate (30) is provided with a first flat face (30A) and with a second flat face (30B), said second flat face (30B) being opposite and parallel to said first flat face (30A),
the support and guide structure (10) being **characterized in that** said second flat face (30B) has at least two spacing steps (44) which are configured for abutting against the ends (32A') of at least two of said side walls (32, 34, 36) and which are shaped and sized so as to increase the distance (H4) between said second flat face (30B) and the extremal section of said side walls (32, 34, 36), so as to also increase the height (H3) of said second channel (28A, 28B) compared to the situation wherein the plate (30) is constrained with its first flat face (30A) in contact with the extremal section of said side walls (32, 34, 36), wherein the spacing steps (44) are provided and develop at least at longitudinal extremal edges (30C) of said second flat face (30B).

2. The support and guide structure (10) according to claim 1, **characterized in that** said second channel (28A, 28B) at least partially develops at an extremal section of each of said at least two side walls (32, 34, 36), and **in that** the extremal section of at least one of said side walls (32, 34, 36) is provided with a step (32A, 36A) capable of delimiting, together with the removable plate (30), at least one portion of said second channel (28A, 28B).

3. The support and guide structure (10) according to claim 1 or 2, **characterized in that** it comprises a plurality of first channels (26A, 26B) arranged side by side and a plurality of second channels (28A, 28B) arranged side by side, wherein said second channels (28A, 28B) are in communication with one another, so as to form a single, continuous second channel (28A, 28B).

4. The support and guide structure (10) according to any claims 1 to 3, **characterized in that** the lower guiding element (20) is provided with a plurality of second channels (28A, 28B) for the return path of a plurality of different conveyors (12), and **in that** the height (H1) of the outermost side walls (32, 36) is greater than the height (H2) of at least one central wall (34) provided between said outermost side walls (32, 36).

5. The support and guide structure (10) according to any claims 1 to 4, **characterized in that** said support and guide structure (10) is a sandwich-like structure comprising a plurality of different elements, overlapping one another and constrained to one another, wherein the first element comprises all the components needed for supporting and guiding the conveyor (12) in a forward path, whereas the second element, distinct and separate from said first element, comprises the lower guiding element (20) for supporting and guiding the conveyor (12) in a return path.

6. The support and guide structure (10) according to claim 5, **characterized in that** it comprises one or more additional elements designed to be arranged between said first element and said second element.

7. The support and guide structure (10) according to any claims 1 to 6, **characterized in that** the upper guiding element (60) comprises at least two guides (14, 16, 18) distinct from each other and arranged at a predetermined distance, having a flat upper surface designed to support and guide the conveyor (12) in its forward path, said at least two guides (14, 16, 18) delimiting a respective upper channel (124), open on its upper side and capable of at least partially housing the second articulation portions (12B) of the links of the conveyor (12) in its forward path, said at least two guides (14, 16, 18) being oriented according to respective development axes (X', Y', Z'), which are substantially parallel to a development axis (X, Y) of said at least one first channel (26A, 26B) and said at least one second channel (28A, 28B).

8. The support and guide structure (10) according to claim 7, **characterized in that** said at least two guides (14, 16, 18) are provided with fastening means (48, 50), which are reversible and removable with respect to an upper surface (22) of the lower guiding element (20).

9. The support and guide structure (10) according to claim 7 or 8, **characterized in that** said at least two guides (14, 16, 18) are made of a second material that is different from the first material, which the second guide element (20) if made of.

10. The support and guide structure (10) according to any claims 7 to 9, **characterized in that** the first upper guiding element (60) is at least partially made of a first material featuring a smaller friction coefficient than the friction coefficient of the material which the second lower guiding element (20) is made of, in particular with a material featuring a smaller friction coefficient by at least 10%.

11. Support and guide structure (10) according to any claims 7 to 10, **characterized in that** said at least one first channel (26A, 26B) and said at least one second channel (28A, 28B) are oriented according to development axes (X, Y) that are substantially parallel to the development axes (X', Y', Z') of the guides (14, 16, 18) of each upper guiding element (60).

12. The support and guide structure (10) according to claim 11, **characterized in that** both the development axis (X, Y) of each first channel (26A, 26B) and of each second channel (28A, 28B), and also the corresponding development axes (X', Y', Z') of the guides (14, 16, 18) of each upper guiding element (60), are curvilinear axes.

13. The support and guide structure (10) according to claim 12, **characterized in that** said curvilinear axes consist of concentric arcs of circle.

14. The support and guide structure (10) according to any claims 1 to 13, **characterized in that** it comprises a plurality of cavities (42), each designed to house one or more magnets.

15. The support and guide structure (10) according to claim 14, **characterized in that** said cavities (42) are obtained in the lower guiding element (20), are open at said at least one first channel (26A, 26B), and are provided with respective closing plates.

## Patentansprüche

1. Trag- und Führungsstruktur (10) für mindestens einen umlaufenden Förderer (12) mit Gelenkgliedern (M), wobei die Glieder (M) einen ersten, im Wesentlichen flachen Abschnitt (12A), der konfiguriert ist, dass das zu transportierende Produkt darauf liegt, und einen zweiten Abschnitt (12B) einer gegenseitigen Gelenkverbindung der Glieder (M) umfassen, die Trag- und Führungsstruktur (10) umfassend:
- mindestens ein oberes Führungselement (60), das angepasst ist, um mindestens einen Förderer (12) auf einem Vorlaufweg zu tragen und zu führen; und
- mindestens ein unteres Führungselement (20), das angepasst ist, den mindestens einen Förderer (12) auf einer Rücklaufweg zu tragen und zu führen,
wobei das untere Führungselement (20) Folgendes umfasst:
- mindestens einen ersten Kanal (26A, 26B), der konfiguriert ist, um mindestens teilweise die zweiten Gelenkabschnitte (12B) der Glieder (M) des mindestens einen Förderers (12) auf seinem Rücklaufweg aufzunehmen; und
- mindestens einen zweiten Kanal (28A, 28B), der in Verbindung mit und unterhalb eines jeweiligen ersten Kanals (26A, 26B) verläuft und konfiguriert ist, um mindestens teilweise die ersten im Wesentlichen flachen Abschnitte (12A) der Glieder (M) des mindestens einen Förderers (12) auf seinem Rücklaufweg zu tragen und zu führen,
wobei der erste Kanal (26A, 26B) durch eine obere Fläche (24) und durch mindestens zwei Seitenwände (32, 34, 36) begrenzt ist, die sich von der oberen Fläche (24) nach unten erstrecken, wobei der zweite Kanal (28A, 28B) ein Querschnittsmaß (L2) aufweist, das größer ist als das entsprechende Querschnittsmaß (L1) des ersten Kanals (26A, 26B), wobei der zweite Kanal (28A, 28B) mindestens teilweise durch mindestens einen Abschnitt der zwei Seitenwände (32, 34, 36) begrenzt ist,
wobei die Trag- und Führungsstruktur (10) mindestens eine Platte (30) umfasst, die an der Unterseite abnehmbar an dem unteren Führungselement (20), insbesondere an einem extremalen Abschnitt der mindestens zwei Seitenwände (32, 34, 36), eingeengt ist,
wobei der zweite Kanal (28A, 28B) durch mindestens einen extremalen Abschnitt (32A, 32B; 34A; 36A, 36B) der mindestens zwei Seitenwände (32, 34, 36) und durch die mindestens eine Platte (30) begrenzt ist, und
wobei die mindestens eine Platte (30) den zweiten Kanal (28A, 28B) auf der Unterseite reversibel verschließt, um ein gleitendes und entfernbares Tragen des mindestens einen Förderers (12) auf seinem Rücklaufweg zu bilden,
wobei die abnehmbare Platte (30) mit einer ersten flachen Fläche (30A) und mit einer zweiten flachen Fläche (30B) versehen ist, wobei die zweite flache Fläche (30B) gegenüber und parallel zu der ersten flachen Fläche (30A) ist,
wobei die Trag- und Führungsstruktur (10) **dadurch gekennzeichnet ist, dass** die zweite flache Fläche (30B) mindestens zwei Abstandsstufen (44) aufweist, die konfiguriert sind, um gegen die Enden (32A') von mindestens zwei der Seitenwände (32, 34, 36) zu stoßen, und die geformt und bemessen sind, um den Abstand (H4) zwischen der zweiten flachen Fläche (30B) und dem äußersten Abschnitt der Seitenwände (32, 34, 36) zu vergrößern, um auch die Höhe (H3) des zweiten Kanals (28A, 28B) im Vergleich zu der Situation vergrößert wird, in der die Platte (30) mit ihrer ersten flachen Fläche (30A) in Kontakt mit dem extremalen Abschnitt der Seitenwände (32, 34, 36) eingeengt ist, wobei die Abstandsstufen (44) bereitgestellt sind und mindestens an den äußersten Längskanten (30C) der zweiten flachen Fläche (30B) verlaufen.

2. Trag- und Führungsstruktur (10) nach Anspruch 1, **dadurch gekennzeichnet, dass** der zweite Kanal (28A, 28B) mindestens teilweise an einem extremalen Abschnitt von jeder der mindestens zwei Seitenwände (32, 34, 36) verläuft, und dass der extremale Abschnitt mindestens einer der Seitenwände (32, 34, 36) mit einer Stufe (32A, 36A) versehen ist, die in der Lage ist, zusammen mit der abnehmbaren Platte (30) mindestens einen Teil des zweiten Kanals (28A, 28B) zu begrenzen.

3. Trag- und Führungsstruktur (10) nach Anspruch 1 oder 2, **dadurch gekennzeichnet, dass** sie eine Vielzahl von ersten Kanälen (26A, 26B), die nebeneinander angeordnet sind, und eine Vielzahl von zweiten Kanälen (28A, 28B), die nebeneinander angeordnet sind, umfasst, wobei die zweiten Kanäle (28A, 28B) miteinander in Verbindung sind, um einen einzigen, durchgehenden zweiten Kanal (28A, 28B) zu bilden.

4. Trag- und Führungsstruktur (10) nach den Ansprüchen 1 bis 3, **dadurch gekennzeichnet, dass** das untere Führungselement (20) mit einer Vielzahl von zweiten Kanälen (28A, 28B) für den Rücklaufweg einer Vielzahl von verschiedenen Förderern (12) versehen ist, und dass die Höhe (H1) der äußersten Seitenwände (32, 36) größer ist als die Höhe (H2) mindestens einer mittleren Wand (34), die zwischen den äußersten Seitenwänden (32, 36) bereitgestellt ist.

5. Trag- und Führungsstruktur (10) nach den Ansprüchen 1 bis 4, **dadurch gekennzeichnet, dass** die Trag- und Führungsstruktur (10) eine sandwichartige Struktur ist, umfassend eine Vielzahl von verschiedenen Elementen, die einander überlappen und aneinander eingeengt sind, wobei das erste Element alle Komponenten umfasst, die zum Tragen und Führen des Förderers (12) auf einem Vorlaufweg erforderlich sind, während das zweite Element, das von dem ersten Element verschieden und getrennt ist, das untere Führungselement (20) zum Tragen und Führen des Förderers (12) auf einem Rücklaufweg umfasst.

6. Trag- und Führungsstruktur (10) nach Anspruch 5, **dadurch gekennzeichnet, dass** sie ein oder mehrere zusätzliche Elemente umfasst, die konstruiert sind, um zwischen dem ersten Element und dem zweiten Element angeordnet zu sein.

7. Trag- und Führungsstruktur (10) nach den Ansprüchen 1 bis 6, **dadurch gekennzeichnet, dass** das obere Führungselement (60) mindestens zwei Führungen (14, 16, 18) umfasst, die voneinander verschieden und in einem vorbestimmten Abstand angeordnet sind, und die eine flache obere Oberfläche aufweisen, die konstruiert ist, um den Förderer (12) auf seinem Vorlaufweg zu tragen und zu führen, wobei die mindestens zwei Führungen (14, 16, 18) einen jeweiligen oberen Kanal (124) begrenzen, der an seiner Oberseite offen ist und in der Lage ist, mindestens teilweise die zweiten Gelenkabschnitte (12B) der Glieder des Förderers (12) auf seinem Vorlaufweg aufzunehmen, wobei die mindestens zwei Führungen (14, 16, 18) gemäß jeweiligen Verlaufsachsen (X', Y', Z') ausgerichtet sind, die im Wesentlichen parallel zu einer Verlaufsachse (X, Y) des mindestens einen ersten Kanals (26A, 26B) und des mindestens einen zweiten Kanals (28A, 28B) sind.

8. Trag- und Führungsstruktur (10) nach Anspruch 7, **dadurch gekennzeichnet, dass** die mindestens zwei Führungen (14, 16, 18) mit Befestigungsmitteln (48, 50) versehen sind, die in Bezug auf eine obere Fläche (22) des unteren Führungselements (20) umkehrbar und entfernbar sind.

9. Trag- und Führungsstruktur (10) nach Anspruch 7 oder 8, **dadurch gekennzeichnet, dass** die mindestens zwei Führungen (14, 16, 18) aus einem zweiten Material hergestellt sind, das sich von dem ersten Material unterscheidet, aus dem das zweite Führungselement (20) hergestellt ist.

10. Trag- und Führungsstruktur (10) nach den Ansprüchen 7 bis 9, **dadurch gekennzeichnet, dass** das erste obere Führungselement (60) mindestens teilweise aus einem ersten Material hergestellt ist, das einen geringeren Reibungskoeffizienten aufweist als der Reibungskoeffizient des Materials, aus dem das zweite untere Führungselement (20) hergestellt ist, insbesondere aus einem Material, das einen um mindestens 10 % geringeren Reibungskoeffizienten aufweist.

11. Trag- und Führungsstruktur (10) nach allen Ansprüchen 7 bis 10, **dadurch gekennzeichnet, dass** der mindestens eine erste Kanal (26A, 26B) und der mindestens eine zweite Kanal (28A, 28B) gemäß Verlaufsachsen (X, Y) ausgerichtet sind, die im Wesentlichen parallel zu den Verlaufsachsen (X', Y', Z') der Führungen (14, 16, 18) von jedem oberen Führungselement (60) sind.

12. Trag- und Führungsstruktur (10) nach Anspruch 11, **dadurch gekennzeichnet, dass** sowohl die Verlaufsachse (X, Y) von jedem ersten Kanal (26A, 26B) und von jedem zweiten Kanal (28A, 28B) als auch die entsprechenden Verlaufsachsen (X', Y', Z') der Führungen (14, 16, 18) von jedem oberen Führungselement (60) kurvenförmige Achsen sind.

13. Trag- und Führungsstruktur (10) nach Anspruch 12, **dadurch gekennzeichnet, dass** die kurvenförmigen Achsen aus konzentrischen Kreisbögen bestehen.

14. Trag- und Führungsstruktur (10) nach den Ansprüchen 1 bis 13, **dadurch gekennzeichnet, dass** sie eine Vielzahl von Hohlräumen (42) umfasst, die jeweils konstruiert sind, um einen oder mehrere Magnete aufzunehmen.

15. Trag- und Führungsstruktur (10) nach Anspruch 14, **dadurch gekennzeichnet, dass** die Hohlräume (42) in dem unteren Führungselement (20) erlangen werden, an dem mindestens einen ersten Kanal (26A, 26B) offen sind und mit entsprechenden Verschlussplatten versehen sind.

## Revendications

1. Structure de support et de guidage (10) pour au moins un convoyeur en boucle fermée (12) avec des liens articulés (M), dans lequel lesdits liens (M) comprennent une première partie (12A) sensiblement plate, configurée pour que le produit transporté repose sur elle, et une seconde partie (12B) d'articulation mutuelle des liens (M), la structure de support et de guidage (10) comprenant :
- au moins un élément de guidage supérieur (60) adapté pour supporter et guider au moins un convoyeur (12) dans une trajectoire d'avance ; et
- au moins un élément de guidage inférieur (20) adapté pour supporter et guider dudit au moins un convoyeur (12) dans une trajectoire de retour,
dans lequel ledit élément de guidage inférieur (20) comprend :
- au moins un premier canal (26A, 26B) configuré pour loger au moins partiellement les secondes parties d'articulation (12B) des maillons (M) dudit au moins un convoyeur (12) dans sa trajectoire de retour ; et
- au moins un deuxième canal (28A, 28B), se développant en communication avec et sous un premier canal respectif (26A, 26B) et configuré pour supporter et guider au moins partiellement les premières parties sensiblement plates (12A) des maillons (M) dudit au moins un convoyeur (12) dans sa trajectoire de retour,
dans lequel ledit premier canal (26A, 26B) est délimité par une surface supérieure (24) et par au moins deux parois latérales (32, 34, 36) s'étendant vers le bas depuis ladite surface supérieure (24), dans lequel ledit second canal (28A, 28B) a une dimension en coupe transversale (L2) qui est supérieure à la dimension en coupe transversale correspondante (L1) du premier canal (26A, 26B), dans lequel ledit second canal (28A, 28B) est au moins partiellement délimité par au moins une partie desdites deux parois latérales (32, 34, 36), dans lequel la structure de support et de guidage (10) comprend au moins une plaque (30) fixée de manière amovible sur le côté inférieur audit élément de guidage inférieur (20), en particulier à une partie extrême desdites au moins deux parois latérales (32, 34, 36), dans lequel ledit second canal (28A, 28B) est délimité par au moins une section extrême (32A, 32B ; 34A ; 36A, 36B) desdites au moins deux parois latérales (32, 34, 36) et par ladite au moins une plaque (30), et dans lequel ladite au moins une plaque (30) ferme de manière réversible sur le côté inférieur ledit second canal (28A, 28B) de manière à former un support coulissant et amovible dudit au moins un convoyeur (12) dans sa trajectoire de retour, dans laquelle la plaque amovible (30) est pourvue d'une première face plane (30A) et d'une seconde face plane (30B), ladite seconde face plane (30B) étant opposée et parallèle à ladite première face plane (30A),
la structure de support et de guidage (10) étant **caractérisée en ce que** ladite seconde face plane (30B) comporte au moins deux gradins d'écartement (44) qui sont configurés pour venir en butée contre les extrémités (32A') d'au moins deux desdites parois latérales (32, 34, 36) et qui sont formés et dimensionnés de manière à augmenter la distance (H4) entre ladite seconde face plane (30B) et la section extrême desdites parois latérales (32, 34, 36), de manière à augmenter également la hauteur (H3) dudit second canal (28A, 28B) par rapport à la situation dans laquelle la plaque (30) est contrainte avec sa première face plane (30A) en contact avec la partie extrême desdites parois latérales (32, 34, 36), dans laquelle les marches d'espacement (44) sont prévues et se développent au moins sur les bords longitudinaux extrêmes (30C) de ladite deuxième face plane (30B).

2. Structure de support et de guidage (10) selon la revendication 1, **caractérisée en ce que** ledit second canal (28A, 28B) se développe au moins partiellement au niveau d'une section extrême de chacune desdites au moins deux parois latérales (32, 34, 36), et **en ce que** la section extrême d'au moins une desdites parois latérales (32, 34, 36) est pourvue d'un gradin (32A, 36A) capable de délimiter, avec la plaque amovible (30), au moins une partie dudit second canal (28A, 28B).

3. Structure de support et de guidage (10) selon la revendication 1 ou 2, **caractérisée en ce qu'**elle comprend une pluralité de premiers canaux (26A, 26B) disposés côte à côte et une pluralité de seconds canaux (28A, 28B) disposés côte à côte, dans laquelle lesdits seconds canaux (28A, 28B) sont en communication les uns avec les autres, de manière à former un second canal unique et continu (28A, 28B).

4. Structure de support et de guidage (10) selon l'une quelconque des revendications 1 à 3, **caractérisée en ce que** l'élément de guidage inférieur (20) est pourvu d'une pluralité de seconds canaux (28A, 28B) pour la trajectoire de retour d'une pluralité de convoyeurs différents (12), et **en ce que** la hauteur (H1) des parois latérales les plus extérieures (32, 36) est supérieure à la hauteur (H2) d'au moins une paroi centrale (34) prévue entre lesdites parois latérales les plus extérieures (32, 36).

5. Structure de support et de guidage (10) selon l'une quelconque des revendications 1 à 4, **caractérisée en ce que** ladite structure de support et de guidage (10) est une structure en sandwich comprenant une pluralité d'éléments différents, se chevauchant les uns les autres et contraints les uns aux autres, dans lesquels le premier élément comprend tous les composants nécessaires pour supporter et guider le convoyeur (12) dans une trajectoire d'avance, tandis que le second élément, distinct et séparé dudit premier élément, comprend l'élément de guidage inférieur (20) pour supporter et guider le convoyeur (12) dans une trajectoire de retour.

6. Structure de support et de guidage (10) selon la revendication 5, **caractérisée en ce qu'**elle comprend un ou plusieurs éléments supplémentaires conçus pour être disposés entre ledit premier élément et ledit second élément.

7. Structure de support et de guidage (10) selon l'une quelconque des revendications 1 à 6, **caractérisée en ce que** l'élément de guidage supérieur (60) comprend au moins deux guides (14, 16, 18) distincts l'un de l'autre et disposés à une distance prédéterminée, ayant une surface supérieure plane conçue pour supporter et guider le convoyeur (12) dans sa trajectoire d'avance, lesdits au moins deux guides (14, 16, 18) délimitant un canal supérieur respectif (124), ouvert sur sa face supérieure et capable de loger au moins partiellement les secondes parties d'articulation (12B) des maillons du convoyeur (12) dans sa trajectoire d'avance, lesdits au moins deux guides (14, 16, 18) étant orientés selon des axes de développement respectifs (X', Y', Z'), qui sont sensiblement parallèles à un axe de développement (X, Y) dudit au moins un premier canal (26A, 26B) et dudit au moins un second canal (28A, 28B).

8. Structure de support et de guidage (10) selon la revendication 7, **caractérisée en ce que** lesdits au moins deux guides (14, 16, 18) sont munis de moyens de fixation (48, 50), qui sont réversibles et amovibles par rapport à une surface supérieure (22) de l'élément de guidage inférieur (20).

9. Structure de support et de guidage (10) selon la revendication 7 ou 8, **caractérisée en ce que** lesdits au moins deux guides (14, 16, 18) sont faits d'un second matériau qui est différent du premier matériau, dont est fait le second élément de guidage (20).

10. Structure de support et de guidage (10) selon les revendications 7 à 9, **caractérisée en ce que** le premier élément de guidage supérieur (60) est au moins partiellement constitué d'un premier matériau présentant un coefficient de frottement inférieur au coefficient de frottement du matériau dont est constitué le deuxième élément de guidage inférieur (20), en particulier avec un matériau présentant un coefficient de frottement plus faible d'au moins 10 %.

11. Structure de support et de guidage (10) selon l'une quelconque des revendications 7 à 10, **caractérisée en ce que** ledit au moins un premier canal (26A, 26B) et ledit au moins un deuxième canal (28A, 28B) sont orientés selon des axes de développement (X, Y) qui sont sensiblement parallèles aux axes de développement (X', Y', Z') des guides (14, 16, 18) de chaque élément de guidage supérieur (60).

12. Structure de support et de guidage (10) selon la revendication 11, **caractérisée en ce que** l'axe de développement (X, Y) de chaque premier canal (26A, 26B) et de chaque deuxième canal (28A, 28B), ainsi que les axes de développement correspondants (X', Y', Z') des guides (14, 16, 18) de chaque élément de guidage supérieur (60), sont des axes curvilignes.

13. Structure de support et de guidage (10) selon la revendication 12, **caractérisée en ce que** lesdits axes curvilignes sont constitués d'arcs de cercle concentriques.

14. Structure de support et de guidage (10) selon l'une quelconque des revendications 1 à 13, **caractérisée en ce qu'**elle comprend une pluralité de cavités (42), chacune conçue pour loger un ou plusieurs aimants.

15. Structure de support et de guidage (10) selon la revendication 14, **caractérisée en ce que** lesdites cavités (42) sont obtenues dans l'élément de guidage inférieur (20), sont ouvertes au niveau dudit au moins un premier canal (26A, 26B), et sont pourvues de plaques de fermeture respectives.
